(19)

Europäisches Patentamt

European Patent Office

Office européen des brevets

(11) **EP 4 298 895 A1**

(12) **EUROPEAN PATENT APPLICATION**

(43) Date of publication:
**03.01.2024 Bulletin 2024/01**

(21) Application number: **22181581.4**

(22) Date of filing: **28.06.2022**

(51) International Patent Classification (IPC):
**A01G 13/02** (2006.01) **A01G 25/02** (2006.01)

(52) Cooperative Patent Classification (CPC):
**A01G 13/0275; A01G 13/0268; A01G 25/02**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **ABU DHABI POLYMERS CO. LTD (BOROUGE) LLC.**
  **Abu Dhabi (AE)**
• **Borealis AG**
  **1020 Vienna (AT)**

(72) Inventors:
• **TAJANE, Vilas**
  **400 063 Mumbai (IN)**
• **TEO, Aster**
  **049145 Singapore (SG)**
• **THAKOR, Pavankumar**
  **400 063 Mumbai (IN)**
• **PANDYA, Rakesh**
  **400 063 Mumbai (IN)**
• **KUMAR DAS, Subrata**
  **Abu Dhabi (AE)**

(74) Representative: **Maiwald GmbH**
  **Elisenhof**
  **Elisenstraße 3**
  **80335 München (DE)**

(54) **PERFORATED MULCH FILM AND CROP CULTIVATION SYSTEM COMPRISING THE SAME**

(57)     A crop cultivation system comprising at least one plant bed (8), one polyethylene mulch film (1) having a particular pattern of perforations (2) per plant bed (8) and a drip irrigation system comprising one drip irrigation line (6) per plant bed (8) and the mulch film (1) itself

Figure 1     Mulch film from above

## Description

**Field** of the Invention

The present invention relates to a mulch film having a particular pattern of perforations and a crop cultivation system comprising at least one plant bed, one mulch film per plant bed and a drip irrigation system comprising one drip irrigation line per plant bed

Background to the Invention

Rice is one of the most basic staples in the diets of billions of people around the globe. In the 2020/2021 crop year, over 500 million metric tonnes of rice was consumed worldwide. The cultivation of rice is, however, known to be very intensive, with large amounts of water required to successfully grow rice using conventional methods, as well as being very demanding on rice farmers, both physically and financially.

As with all farming, rice farming takes place at the mercy of weather conditions, which, as a result of ongoing climate change, are increasingly unreliable, with both periods of water scarcity (i.e. drought) and excess (e.g. heavy storms) increasing in their occurrence.

Even without the challenges described above, it is always preferable to maximize productivity, irrespective of the crop being grown. Whilst there have been significant developments in this field, including improved crop rotation and other such farming techniques, further improvements, through applying specific irrigation technology would be very welcome, especially if they enable improved yields at lower costs and with reduced labour requirements.

## Summary of the Invention

The present invention is based on the finding that a novel mulch film, preferably in combination with a particular drip irrigation system, can be used to improve crop yields and farming outcomes, especially when growing rice.

In a first aspect, the present invention is directed to a crop cultivation system, comprising:

   i) at least one plant bed;
   ii) one oblong polyethylene mulch film according to the first aspect per plant bed, covering said plant bed; and
   iii) a drip irrigation system comprising one drip irrigation line per plant bed and a regularly spaced series of drip outlets along said drip irrigation line,

wherein each oblong polyethylene mulch film, being either a monolayer or multilayer film, has a regular array of perforations, spaced in two lines symmetrically either side of a first axis that is parallel to the length of the mulch film and that is positioned equidistant from the long edges of the mulch film, wherein each line of perforations is parallel with the first axis, with the shortest distance between the centre of each perforation and the first axis being defined as A wherein the perforations are spaced regularly along the line parallel with the first axis, having a spacing, defined as B, between the centres of adjacent perforations along either of the two lines, wherein B/A is in the range from 1.5 to 2.0, wherein each drip irrigation line is positioned along the first axis of each mulch film, and the spacing between each drip outlet along the drip irrigation line is defined as E and E/B is in the range from 1.5 to 2.0.

In a further aspect, the present invention is directed to an oblong polyethylene mulch film, being either a monolayer or multilayer film, having a regular array of perforations, spaced in two lines symmetrically either side of a first axis that is parallel to the length of the mulch film and that is positioned equidistant from the long edges of the mulch film, wherein each line of perforations is parallel with the first axis, with the shortest distance between the centre of each perforation and the first axis being defined as A wherein the perforations are spaced regularly along the line parallel with the first axis, having a spacing, defined as B, between the centres of adjacent perforations along either of the two lines, wherein B/A is in the range from 1.5 to 2.0.

Definitions

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of elements, this is also to be understood to disclose a group, which preferably consists only of these elements.

Where an indefinite or definite article is used when referring to a singular noun, e.g. "a", "an" or "the", this includes a plural of that noun unless something else is specifically stated.

Detailed Description

Mulch film

In one aspect, the present invention is directed to a mulch film.

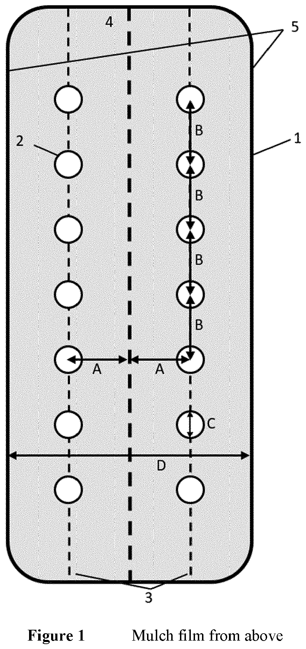

An exemplary mulch film 1 is depicted in Figure 1.

The mulch film is an oblong polyethylene mulch film 1.

This means that the mulch film 1 must be oblong in shape. The term "oblong" means that the mulch film has two straight parallel long sides 5, whilst the precise nature of the shorter end of the mulch film is not limited. For example, a rectangle is an example of an oblong shape wherein the ends are parallel, straight, and perpendicular to the long edges. The ends could, for example, also be curved or straight with curved corners. The precise form of the end of the film is not critical for the present invention. Although the mulch film 1 of Figure 1 is shown to be rectangular with curved corners, this shape is simply one of the many possible oblong shapes that the film could take and is not intended to limit the shape. It is preferred that the mulch film 1 is rectangular in shape.

Furthermore, the mulch film must be made from polyethylene, i.e. from an ethylene-based polymer containing at least 50 wt.-% ethylene monomers. Preferably the ethylene content of the ethylene-based polymer is at least 60 wt.-%, more preferably at least 70 wt.-%, yet more preferably at least 80 wt.-%, most preferably at least 90 wt.-%. If comonomers are present in the polyethylene, then it is preferred that any comonomers are selected from $C_3$ to $C_{12}$ alpha olefins, more preferably from $C_4$ to Cs alpha olefins.

It is preferred that the mulch film 1 comprises polyethylene in an amount in the range from 85 to 100 wt.-%, more preferably in the range from 90 to 100 wt.-%, most preferably in the range from 95 to 100 wt.-%.

In addition to the polyethylene as described above, the mulch film 1 may contain additives (Ad). The additives (Ad) are selected from additives known in the art, preferably selected from the group consisting of antioxidants, stabilizers, fillers, colorants, nucleating agents, antistatic agents, and mixtures thereof.

Such additives are generally commercially available and are described, for example, in "Plastic Additives Handbook", pages 871 to 873, 5th edition, 2001 of Hans Zweifel.

The oblong polyethylene mulch film **1** is primarily defined by its shape, in particular with regard to perforations in the film, as illustrated in Figure 1.

The oblong polyethylene mulch film has a regular array of perforations **2,** spaced in two lines **3** symmetrically either side of a first axis **4.** This first axis is parallel to the length of the mulch film **1** (i.e. parallel to the two parallel long edges **5**). The first axis **4** is positioned equidistant from the long edges **5** of the mulch film **1.** Each line **3** of perforations is parallel with the first axis **4.** The perforations are spaced regularly along the line **3** parallel with the first axis **4.**

The shortest distance between the centre of each perforation **2** and the first axis **4** is defined as A. In other words, the distance between the line **3** and the first axis **4** is A (wherein the first line passes through the centre of each perforation).

The distance between the centres of adjacent perforations 2 spaced regularly along either of the two lines 3 (i.e. the spacing) is defined as B.

The ratio B/A must be in the range from 1.5 to 2.0, more preferably in the range from 1.6 to 1.9, most preferably in the range from 1.6 to 1.8.

It is preferred that the perforations are all the same shape and size.

It is particularly preferred that each perforation is essentially circular. As would be understood by the person skilled in the art, films have a tendency to stretch and/or deform, meaning that any perforation that has been cut in a circular shape may no longer be perfectly circular in nature. The term essentially circular encompasses such perforations that, due to stretching/deformity, are no longer perfectly circular. The diameter of said essentially circular perforations is defined as C.

The ratio C/A is preferably in the range from 0.20 to 0.75, more preferably within the range from 0.25 to 0.70, most preferably within the range from 0.30 to 0.67.

The ratio C/B is preferably in the range from 0.10 to 0.45, more preferably within the range from 0.15 to 0.42, most preferably within the range from 0.18 to 0.40.

Furthermore, the distance between the two long edges of the oblong polyethylene mulch film (i.e. the width of the oblong polyethylene mulch film) is defined as D.

It is preferred that the ratio D/A is in the range from 4 to 14, more preferably in the range from 5 to 12, most preferably in the range from 6 to 10.

Although the mulch film according to the first aspect can be used with many types of crop, it is preferred that though the mulch film according to the first aspect can be used with many types of crop, it is preferred that it is suitable for use growing rice.

The ratios for B/A, C/A, C/B and D/A provided above are applicable for each crop; however, if the crop is rice, then the absolute values for the distances A to D can be more precisely defined.

In absolute terms, it is preferred that the distance A is in the range from 10 to 20 cm, more preferably in the range from 12 to 18 cm, most preferably in the range from 13 to 17 cm.

It is preferred that the distance B is in the range from 17 to 33 cm, more preferably in the range from 20 to 30 cm, most preferably in the range from 23 to 27 cm.

It is preferred that the distance C is in the range from 3 to 12 cm, more preferably in the range from 4 to 11 cm, most preferably in the range from 4 to 10 cm.

It is preferred that the distance D is in the range from 60 to 210 cm, more preferably in the range from 75 to 180 cm, most preferably in the range from 90 to 150 cm.

In one particular embodiment, the distance A is in the range from 10 to 20 cm, the distance B is in the range from 17 to 33 cm, the distance C is preferably in the range from 3 to 12 cm, and the distance D is in the range from 60 to 210 cm.

More preferably, the distance A is in the range from 12 to 18 cm, the distance B is in the range from 20 to 30 cm, the distance C is preferably in the range from 4 to 11 cm, and the distance D is in the range from 75 to 180 cm.

Most preferably, the distance A is in the range from 13 to 17 cm, the distance B is in the range from 23 to 27 cm, the distance C is preferably in the range from 4 to 10 cm, and the distance D is in the range from 90 to 150 cm.

The oblong polyethylene mulch film 1 may be either a monolayer or multilayer film. If the film is a multilayer film, then each layer will be a polyethylene layer. Preferably, the oblong polyethylene mulch film 1 is a multilayer film, more preferably a 3-layered film.

If the oblong polyethylene mulch film 1 is a 3-layered film, then the layers of the film are termed the outer layer (OL), which faces away from the ground, the core layer (CL), which is between the other two layers, and the inner layer (which faces the ground).

The outer layer of the mulch film preferably comprises a polyethylene component AOL. Preferably, the component AOL is linear low density ethylene polymer (LLDPE).

*Component AOL*

Preferably, the component AOL is a multimodal linear low density ethylene polymer, more preferably a multimodal, such as a bimodal, linear low density ethylene copolymer of ethylene with a comonomer selected from alphaolefins having from 4 to 10 carbon atoms. More preferably, the component AOL is a copolymer of ethylene and 1-butene or 1-hexene, most preferred is 1-butene.

Preferably, the component AOL has a density of from 915 to 925 kg/m$^3$ and an $MFR_2$ of from 0.1 to 0.4 g/10 min, determined according to ISO 1133.

Such multimodal LLDPEs and their production are, for example, described in WO 2004/000933 A1, p. 9 to 12.

The component AOL preferably has a density of from 918 to 925 kg/m$^3$, more preferably from 920 to 925 kg/m$^3$, and an $MFR_2$ of from 0.1 to 0.4 g/10 min, more preferably, from 0.15 to 0.30 g/10 min. Preferably, the total amount of comonomers present in the component AOL is of from 2.0 to 7.0 mol%, more preferably from 2.5 to 6.5 mol%, and most preferably from 3.0 to 6.0 mol%.

In a particularly preferred embodiment, the component AOL is a multimodal linear low density ethylene polymer, more preferably a bimodal linear low density ethylene copolymer of ethylene with a comonomer selected from alphaolefins having from 4 to 10 carbon atoms, most preferred is 1-butene, and has an $MFR_2$ of from 0.15 to 0.30 g/10 min, and/or an $MFR_5$ of from 0.50 to 1.00 g/10 min and/or an $MFR_{21}$ of from 12 to 24 g/10 min, and/or a density of from 920 to 925 kg/m$^3$, and/or a molecular weight distribution (MWD) of from 10 to 25, and/or an $M_n$ of from 10 to 18 kg/mol, and/or an $M_w$ of from 150 to 300 kg/mol, and/or an $MFR_{21}/MFR_2$ ratio ($FRR_{21/2}$) of from 60 to 150 and/or an $MFR_{21}/MFR_5$ ratio ($FRR_{21/5}$) of from 16 to 30.

As the component AOL, resin Borstar FB1200 as produced by Borouge may be used.

The core layer (CL) of the mulch film is made of a core layer composition comprising components, which particularly contribute to mechanical performance and maintain optical properties of the mulch film like light transmittance.

*Component ACL*

The core layer composition may comprise a component ACL. Preferably, the component ACL is linear low density ethylene polymer (LLDPE).

Preferably, the component ACL is a multimodal linear low density ethylene polymer, more preferably a multimodal, such as a bimodal, linear low density ethylene copolymer of ethylene with a comonomer selected from alphaolefins having from 4 to 10 carbon atoms. More preferably, the component ACL is a copolymer of ethylene and 1-butene or 1-hexene, most preferred is 1-butene.

Preferably, the component ACL has a density of from 915 to 925 kg/m$^3$ and an $MFR_2$ of from 0.1 to 0.4 g/10 min, determined according to ISO 1133.

Such multimodal LLDPEs and their production are, for example, described in WO 2004/000933 A1, p. 9 to 12.

The component ACL has a density of from 918 to 925 kg/m$^3$, more preferably from 920 to 925 kg/m$^3$, and an MFR$_2$ of from 0.1 to 0.4 g/10 min, more preferably, from 0.15 to 0.30 g/10 min.

Preferably, the total amount of comonomers present in the component ACL is of from 2.0 to 7.0 mol%, more preferably from 2.5 to 6.5 mol%, and most preferably from 3.0 to 6.0 mol%.

In a particularly preferred embodiment, the component ACL is a multimodal linear low density ethylene polymer, more preferably a bimodal linear low density ethylene copolymer of ethylene with a comonomer selected from alpha-olefins having from 4 to 10 carbon atoms, most preferred is 1-butene, and has an MFR$_2$ of from 0.15 to 0.30 g/10 min, and/or an MFR$_5$ of from 0.50 to 1.00 g/10 min and/or an MFR$_{21}$ of from 12 to 24 g/10 min, and/or a density of from 920 to 925 kg/m$^3$, and/or a molecular weight distribution (MWD) of from 10 to 25, and/or an M$_n$ of from 10 to 18 kg/mol, and/or an M$_w$ of from 150 to 300 kg/mol, and/or an MFR$_{21}$/MFR$_2$ ratio (FRR$_{21/2}$) of from 60 to 150 and/or an MFR$_{21}$/MFR$_5$ ratio (FRR$_{21/5}$) of from 16 to 30.

As the component ACL, resin Borstar FB1200 as produced by Borouge may be used.

Preferably, the component ACL is present in an amount of from 50 to 80 wt.%, more preferably from 55 to 75 wt.%, in the core layer composition, based on the total weight of the core layer composition of mulch film.

*Component BCL*

The core layer composition of the core layer CL of the 3-layered mulch film preferably also comprises a component BCL, which is a linear low density ethylene polymer (LLDPE) having a density of from 915 to 925 kg/m$^3$ and an MFR$_2$ of from 0.5 to 3.0 g/10 min, determined according to ISO 1133.

LLDPEs are well known in the art and are produced in polymerization processes using a catalyst.

Preferably, the component BCL is a multimodal linear low density ethylene polymer, preferably a multimodal ethylene copolymer of ethylene with one or more comonomers selected from alpha-olefins having from 4 to 10 carbon atoms, more preferably a bimodal ethylene copolymer of ethylene with one or more comonomers selected from alpha-olefins having from 4 to 10 carbon atoms.

In a particular embodiment, the component BCL is a multimodal, preferably a bimodal, copolymer of ethylene with two comonomers selected from alpha-olefins having from 4 to 10 carbon atoms, preferably 1-butene and 1-hexene, i.e. a multimodal terpolymer.

Preferably, the ethylene copolymer has a ratio MFR$_{21}$/MFR$_2$ of from 13 to 30 and/or an MWD of 6 or less.

Preferably, the ethylene copolymer comprises, or consists of, a multimodal polymer of ethylene with one or more comonomers selected from alpha-olefins having from 4 to 10 carbon atoms, which has a ratio MFR$_{21}$/MFR$_2$ of from 13 to 30 and an MWD of 6 or less.

Such multimodal ethylene copolymers are disclosed, for example, in WO2016/083208.

The multimodal ethylene copolymer preferably has an MFR$_2$ of from 0.6 to 2.0 g/10 min, and particularly preferred from 1.0 to 1.8 g/10 min.

Preferably, the multimodal ethylene copolymer has a density of from 915 to 925 kg/m$^3$, more preferably of from 916 to 920 kg/m$^3$.

The multimodal ethylene copolymer preferably has a ratio MFR$_{21}$/MFR$_2$ of from 13 to 30, more preferably from 15 to 25.

The multimodal ethylene copolymer preferably has an MWD of 6 or less and usually more than 1, more preferably of from 3 to 5.

The alpha-olefin comonomers having from 4 to 10 carbon atoms of the multimodal ethylene copolymer are preferably 1-butene and/or 1-hexene.

Preferably, the total amount of comonomers present in the multimodal ethylene copolymer is from 0.5 to 10 mol%, preferably from 1 to 8 mol%, more preferably from 1 to 5 mol%, still more preferably from 1.5 to 5 mol% and most preferably from 2.5 to 4 mol%.

In a preferred embodiment, the multimodal ethylene copolymer is a bimodal copolymer, i.e. it comprises a low molecular weight and a high molecular weight component, and has an MFR$_2$ of from 1.0 to 1.8 g/10 min, and/or an MFR$_5$ of from 3.0 to 5.0 g/10 min, and/or an MFR$_{21}$ of from 20 to 40 g/10 min, and/or a density of from 916 to 920 kg/m$^3$, and/or a molecular weight distribution (MWD) of from 3 to 5, and/or an M$_n$ of from 15 to 25 kg/mol, and/or an M$_w$ of from 80 to 140 kg/mol, and/or an MFR$_{21}$/MFR$_2$ ratio (FRR$_{21/2}$) of from 15 to 25, and/or an MFR$_{21}$/MFR$_5$ ratio (FRR$_{21/5}$) of from 6 to 9.

In a further preferred embodiment, the component BCL comprises, or consists of, a multimodal ethylene terpolymer.

Preferably, the multimodal ethylene terpolymer is an ethylene terpolymer having a density of from 915 kg/m$^3$ to 925 kg/m$^3$ and an MFR$_2$ of from 0.5 to 2.0 g/10 min.

The multimodal ethylene terpolymer preferably comprises, or consists of, a multimodal polymer of ethylene with at least two different comonomers selected from alpha-olefins having from 4 to 10 carbon atoms, which has a ratio

$MFR_{21}/MFR_2$ of from 13 to 30 and an MWD of 5 or less.

Such multimodal ethylene terpolymers are disclosed, for example, in WO2016/083208.As far as definitions (such as for the "modality" of a polymer) and production methods for these ethylene terpolymers are concerned, it is referred to WO2016/083208.Furthermore, all embodiments and preferred embodiments of such ethylene terpolymers as described in WO2016/083208, which have a density in the range of from 915 to 925 kg/m$^3$ are also preferred embodiments of the multimodal ethylene terpolymer in the present disclosure, whether or not explicitly described herein.

The multimodal ethylene terpolymer preferably has an $MFR_2$ of from 0.6 to 2.0 g/10 min, and particularly preferred from 1.0 to 1.8 g/10 min.

Preferably, the multimodal ethylene terpolymer has a density of from 915 to 925 kg/m$^3$, more preferably from 916 to 920 kg/m$^3$.

The multimodal ethylene terpolymer preferably has a ratio $MFR_{21}/MFR_2$ of from 13 to 30, more preferably from 15 to 25.

The at least two alpha-olefin comonomers having from 4 to 10 carbon atoms of the multimodal ethylene terpolymer are preferably 1-butene and 1-hexene.

Preferably, the total amount of comonomers present in the multimodal ethylene terpolymer BCL is from 0.5 to 10 mol%, more preferably from 1 to 8 mol%, even more preferably from 1 to 5 mol%, still preferably from 1.5 to 5 mol% and most preferably from 2.5 to 4 mol%.

The multimodal ethylene terpolymer, which preferably is a bimodal terpolymer, preferably comprises, or consists of, an ethylene polymer component (BCL1) and an ethylene polymer component (BCL2), wherein the ethylene polymer component (BCL1) has higher $MFR_2$ than the ethylene polymer component (BCL2).

Preferably, the ethylene polymer component (BCL1) has an $MFR_2$ of from 1 to 50 g/10 min, more preferably from 1 to 40 g/10 min, even more preferably from 1 to 30 g/10 min, still more preferably from 2 to 20 g/10 min, still more preferably from 2 to 15 g/10 min and most preferably from 2 to 10 g/10 min.

The ratio of the $MFR_2$ of ethylene polymer component (BCL1) to the $MFR_2$ of the ethylene polymer component (BCL2) is preferably from 2 to 50, more preferably from 5 to 40, yet more preferably from 10 to 30, even more preferably from 10 to 25 and most preferably from 11 to 25.

Preferably, the ethylene polymer component (BCL1) comprises a different comonomer than the ethylene polymer component (BCL2).

Preferably, the ethylene polymer component (BCL1) has a lower amount (mol%) of comonomer than the ethylene polymer component (BCL2), more preferably, the ratio of [the amount (mol%) of the alpha-olefin comonomer having from 4 to 10 carbon atoms comonomer present in ethylene polymer component (BCL1)] to [the amount (mol%) of at least two alpha-olefin comonomers having from 4 to 10 carbon atoms of the final multimodal ethylene terpolymer BCL] is of from 0.10 to 0.60, preferably from 0.15 to 0.50.

Preferably, the alpha-olefin comonomer having from 4 to 10 carbon atoms of the ethylene polymer component (BCL1) is 1-butene and the alpha-olefin comonomer having from 4 to 10 carbon atoms of the ethylene polymer component (BCL2) is 1-hexene.

Preferably, the ethylene polymer component (BCL1) has different, preferably higher, density than the density of the ethylene polymer component (BCL2).

The density of the ethylene polymer component (BCL1) is preferably from 925 to 950 kg/m$^3$, more preferably from 930 to 945 kg/m$^3$.

Preferably, the multimodal ethylene terpolymer comprises the ethylene polymer component (BCL1) in an amount of from 30 to 70 wt.%, more preferably from 40 to 60 wt.%, even more preferably from 35 to 50 wt.%, still more preferably from 40 to 50 wt.%; and the ethylene polymer component (BCL2) in an amount of from 70 to 30 wt.%, more preferably from 60 to 40 wt.%, even more preferably from 50 to 65 wt.%, still more preferably from 50 to 60 wt.%, based on the total amount (100 wt.%) of the multimodal ethylene terpolymer BCL.

Most preferably, the multimodal ethylene terpolymer consists of the ethylene polymer components (BCL1) and (BCL2) as the sole polymer components. Accordingly, the split between the ethylene polymer component (BCL1) to the ethylene polymer component (BCL2) is (30 to 70):(70 to 30) preferably (32 to 60):(68 to 40), more preferably (35 to 50):(65 to 50), still more preferably (40 to 50):(50 to 60).

In a preferred embodiment, the multimodal ethylene terpolymer has an $MFR_2$ of from 1.0 to 2.0 g/10 min, and/or has a molecular weight distribution (MWD) of from 3.0 to 5.0, and/or is a multimodal terpolymer of ethylene with two comonomers selected from alpha-olefins having from 4 to 10 carbon atoms, preferably 1-butene and 1-hexene.

In a further preferred embodiment, the multimodal ethylene terpolymer is a bimodal terpolymer comprising an ethylene polymer component (BCL1) and an ethylene polymer component (BCL2), wherein the ethylene polymer component (BCL1) has a higher $MFR_2$ than the ethylene polymer component (BCL2), and the ethylene polymer component (BCL1) is a copolymer of ethylene and 1-butene and the ethylene polymer component (BCL2) is a copolymer of ethylene and 1-hexene, preferably, wherein the total comonomer content in the multimodal ethylene terpolymer is from 1 to 5 mol%.

In a particularly preferred embodiment, the multimodal ethylene terpolymer is a bimodal terpolymer, i.e. comprises a low molecular weight and a high molecular weight component, and has an $MFR_2$ of from 1.0 to 1.8 g/10 min, and/or an $MFR_5$ of from 3.0 to 5.0 g/10 min, and/or an $MFR_{21}$ of from 20 to 40 g/10 min, and/or a density of from 916 to 920 kg/m$^3$, and/or a molecular weight distribution (MWD) of from 3.0 to 5.0, and/or an $M_n$ of from 15 to 25 kg/mol, and/or an $M_w$ of from 80 to 140 kg/mol, and/or an $MFR_{21}/MFR_2$ ratio ($FRR_{21/2}$) of from 15 to 25, and/or an $MFR_{21}/MFR_5$ ratio ($FRR_{21/5}$) of from 6 to 9.

For all polymers described herein, all molecular weight parameters are measured by the GPC conventional method as further described in detail below, unless otherwise indicated. Comonomer content is measured by NMR spectroscopy.

Preferred multimodal ethylene terpolymers are also commercially available products such as Anteo™ from Borealis or Borouge having the properties as required herein, especially Anteo™ FK1828 or Anteo™ FK1820.

The component BCL is preferably present in an amount of from 20 to 50 wt.%, more preferably from 25 to 45 wt.%, in the core layer composition, based on the total weight of the core layer composition of mulch film.

The component BCL is particularly suitable to impart dart drop impact and tear resistance of mulch film, while maintaining good optical and tensile properties.

The Inner layer (IL) of mulch film is preferably made of an inner layer composition comprising components that particularly contribute to mechanical performance and maintain optical properties of the film (lower light transmittance).

*Component AIL*

The inner layer (IL) composition may comprise a component AIL. Preferably, the component AIL is linear low density ethylene polymer (LLDPE).

Preferably, the component AIL is a multimodal linear low density ethylene polymer, more preferably a multimodal, such as a bimodal, linear low density ethylene copolymer of ethylene with a comonomer selected from alpha-olefins having from 4 to 10 carbon atoms. More preferably, the component AIL is a copolymer of ethylene and 1-butene or 1-hexene, most preferred is 1-butene.

Preferably, the component AIL has a density of from 915 to 925 kg/m$^3$ and an $MFR_2$ of from 0.1 to 0.4 g/10 min, determined according to ISO 1133.

Such multimodal LLDPEs and their production are, for example, described in WO 2004/000933 A1, p. 9 to 12.

The component AIL has a density of from 918 to 925 kg/m$^3$, more preferably from 920 to 925 kg/m$^3$, and an $MFR_2$ of from 0.1 to 0.4 g/10 min, more preferably, from 0.15 to 0.30 g/10 min.

Preferably, the total amount of comonomers present in the component AIL is of from 2.0 to 7.0 mol%, more preferably from 2.5 to 6.5 mol%, and most preferably from 3.0 to 6.0 mol%.

In a particularly preferred embodiment, the component AIL is a multimodal linear low density ethylene polymer, more preferably a bimodal linear low density ethylene copolymer of ethylene with a comonomer selected from alpha-olefins having from 4 to 10 carbon atoms, most preferred is 1-butene, and has an $MFR_2$ of from 0.15 to 0.30 g/10 min, and/or an $MFR_5$ of from 0.50 to 1.00 g/10 min and/or an $MFR_{21}$ of from 12 to 24 g/10 min, and/or a density of from 920 to 925 kg/m$^3$, and/or a molecular weight distribution (MWD) of from 10 to 25, and/or an $M_n$ of from 10 to 18 kg/mol, and/or an $M_w$ of from 150 to 300 kg/mol, and/or an $MFR_{21}/MFR_2$ ratio ($FRR_{21/2}$) of from 60 to 150 and/or an $MFR_{21}/MFR_5$ ratio ($FRR_{21/5}$) of from 16 to 30.

As the component AIL, resin Borstar FB1200 as produced by Borouge may be used.

Preferably, the component AIL is present in an amount of from 50 to 90 wt.%, more preferably from 55 to 85 wt.%, in the inner layer composition, based on the total weight of the inner layer composition.

*Component BIL*

The inner layer (IL) of mulch film composition may further comprise a component BIL Preferably, the component BIL is linear low density ethylene polymer (LLDPE).

Preferably, the component BIL is a multimodal linear low density ethylene polymer, more preferably a multimodal, such as a bimodal, linear low density ethylene copolymer of ethylene with a comonomer selected from alpha-olefins having from 4 to 10 carbon atoms. More preferably, the component BIL is a copolymer of ethylene and 1-butene or 1-hexene, most preferred is 1-butene.

Preferably, the component BIL has a density of from 915 to 925 kg/m$^3$ and an $MFR_2$ of from 0.5 to 2.0 g/10 min, determined according to ISO 1133.

Such multimodal LLDPEs and their production are, for example, described in WO 2021/013552.

The component BIL has a density preferably of 915 to 920 kg/m$^3$, more preferably of 916 to 920 kg/m$^3$, and an $MFR_2$ of from 0.8 to 2.0 g/10 min, more preferably, from 0.8 to 1.5 g/10 min.

Preferably, the total amount of comonomers present in the component BIL is of from 7.0 wt.% to 13.0 wt.%, preferably from 7.3 wt.% to 12.0 wt.%, still more preferably from 7.5 wt.% to 11.5 wt.% and most preferably from 7.7 wt.% to 11.0 wt.%, based on the total weight of monomer units in the BIL component.

Preferably, the component BIL comprises, or consists of, two ethylene-1-butene copolymer fractions (BIL1) and (BIL2), wherein the first ethylene-1-butene copolymer fraction (BIL1) has higher $MFR_2$ than the second ethylene-1-butene copolymer fraction (BIL2).

The first ethylene-1-butene copolymer fraction (BIL1) has a 1-butene content of from 0.5 wt.% to 7.5 wt.%, preferably from 0.6 wt.% to 5.0 wt.%, still more preferably from 0.7 wt.% to 3.5 wt.% and most preferably from 0.8 wt.% to 3.0 wt.%, based on the total weight of monomer units in the first ethylene-1-butene copolymer fraction.

The first ethylene-1-butene copolymer fraction (BIL1) preferably has a density of from 915 $kg/m^3$ to 955 $kg/m^3$, more preferably of from 925 $kg/m^3$ to 950 $kg/m^3$, and most preferably of from 935 $kg/m^3$ to 945 $kg/m^3$.

The first ethylene-1-butene copolymer fraction (BIL1) preferably consists of ethylene and 1-butene monomer units.

The first ethylene-1-butene copolymer fraction (BIL1) has a melt flow rate $MFR_2$ of from 1.0 g/10 min to less than 50.0 g/10 min, preferably of from 2.0 g/10 min to 45.0 g/10 min, still more preferably of from 3.0 g/10 min to 30.0 g/10 min, even more preferably of from 3.5 g/10 min to 20.0 g/10 min and most preferably of from 4.0 g/ 10 min to 10.0 g/10 min.

It is preferred that the first ethylene-1-butene copolymer fraction (BIL1) has a higher melt flow rate $MFR_2$ than the second ethylene-1-butene copolymer fraction (BIL2). It is further preferred that the first ethylene-1-butene copolymer fraction (BIL1) has a higher melt flow rate $MFR_2$ than the component BIL.

The higher $MFR_2$ values of the first ethylene-1-butene copolymer fraction (BIL1) indicate a lower molecular weight, such as a lower weight average molecular weight $M_w$ of the first ethylene-1-butene copolymer fraction (BIL1) compared to the second ethylene-1-butene copolymer fraction (BIL2) and/or the component BIL.

The first ethylene-1-butene copolymer fraction (BIL1) is preferably present in the component BIL in an amount of from 30 to 47 wt.%, more preferably of from 32 to 46 wt.% and most preferably from 35 to 45 wt.%, based on the total weight of the component BIL.

The first ethylene-1-butene copolymer fraction (BIL1) is usually polymerized as the first polymer fraction in a multistage polymerization process with two or more polymerization stages in sequence.

Consequently, the properties of the first ethylene-1-butene copolymer fraction (BIL1) can be measured directly.

The second ethylene-1-butene copolymer fraction (BIL2) has a 1-butene content of from 10.0 wt.% to 25.0 wt.%, preferably from 12.5 wt.% to 22.0 wt.%, still more preferably from 15.0 wt.% to 21.0 wt.% and most preferably from 16.0 wt.% to 20.0 wt.%, based on the total weight of monomer units in the second ethylene-1-butene copolymer fraction.

The second ethylene-1-butene copolymer fraction (BIL2) preferably has a density of from 870 $kg/m^3$ to 912 $kg/m^3$, more preferably of from 880 $kg/m^3$ to 910 $kg/m^3$, and most preferably of from 890 $kg/m^3$ to 905 $kg/m^3$.

The second ethylene-1-butene copolymer fraction (BIL2) preferably consists of ethylene and 1-butene monomer units.

The second ethylene-1-butene copolymer fraction (BIL2) has a melt flow rate $MFR_2$ of from 0.05 g/10 min to less than 1.0 g/10 min, preferably of from 0.1 g/10 min to 0.8 g/10 min, still more preferably of from 0.2 g/10 min to 0.7 g/10 min, and most preferably of from 0.3 g/ 10 min to 0.6 g/10 min.

It is further preferred that the second ethylene-1-butene copolymer fraction (BIL2) has a lower melt flow rate $MFR_2$ as the component BIL.

The lower $MFR_2$ values of the second ethylene-1-butene copolymer fraction (BIL2) indicate a higher molecular weight, such as a higher weight average molecular weight $M_w$ of the second ethylene-1-butene copolymer fraction (BIL2) compared to the first ethylene-1-butene copolymer fraction (BIL1) and/or the component BIL.

The second ethylene-1-butene copolymer fraction (BIL2) is usually polymerized as the second polymer fraction in the presence of the first ethylene-1-butene copolymer fraction (BIL1) in a multistage polymerization process with two or more polymerization stages in sequence. Consequently, the properties of the second ethylene-1-butene copolymer fraction (BIL2) are not accessible to direct measurement but have to be calculated. Suitable methods for calculating the comonomer content, density and $MFR_2$ of the second ethylene-1-butene copolymer fraction (BIL2) are described in WO 2021/013552.

The second ethylene-1-butene copolymer fraction (BIL2) is preferably present in the component BIL in an amount of from 53 to 65 wt.%, more preferably of from 54 to 63 wt.% and most preferably from 55 to 60 wt.%, based on the total weight of the component BIL.

The weight ratio of the first ethylene-1-butene copolymer fraction (BIL1) to the second ethylene-1-butene copolymer fraction (BIL2) in the component BIL is preferably from 35:65 to 47:53, more preferably from 37:63 to 46:54 and most preferably from 40:60 to 45:55.

In one preferred embodiment of the present invention the component BIL consists of the first ethylene-1-butene copolymer fraction (BIL1) and the second ethylene-1-butene copolymer fraction (BIL2).

In a particularly preferred embodiment of the second aspect, the component BIL is a multimodal linear low density ethylene polymer, more preferably a bimodal linear low density ethylene copolymer of ethylene with a comonomer selected from alpha-olefins having from 4 to 10 carbon atoms, most preferred is 1-butene, comprising two ethylene-1-butene copolymer fractions (BIL1) and (BIL2), and has an $MFR_2$ of from 0.8 to 1.5 g/10 min, and/or an $MFR_{21}$ of from 15 to 35 g/10 min, and/or a density of from 915 to 920 kg/m$^3$, and/or an $MFR_{21}/MFR_2$ ratio ($FRR_{21/2}$) of from 15 to 25.

As the component BIL, resin Anbiq™ FM1810 or FM1818 as produced by Borouge may be used.

Preferably, the component BIL is present in an amount of from 10 to 50 wt.%, more preferably from 15 to 45 wt.%, in the inner layer composition, based on the total weight of the inner layer composition.

It is particularly preferred that the oblong polyethylene mulch film, more preferably the 3-layered oblong polyethylene mulch film, comprises at least 50 wt.-% relative to the total weight of the oblong polyethylene mulch film, of a polyethylene copolymer having the properties listed above for AOL, ACL and AIL, in particular, having a density of from 915 to 925 kg/m$^3$, more preferably from 920 to 925 kg/m$^3$, and an $MFR_2$ of from 0.1 to 0.4 g/10 min, more preferably, from 0.1 to 0.3 g/10 min.

It is furthermore preferred that the oblong polyethylene mulch film is a 3-layered film, wherein at least one of the external layers (i.e. the outer layer and/or inner layer) comprises at least 50 wt.-%, relative to the total weight of the respective layer, of a polyethylene copolymer, preferably a linear low density ethylene polymer, preferably a multimodal linear low density ethylene polymer, more preferably a bimodal linear low density ethylene copolymer, wherein the polyethylene copolymer has a density of from 915 to 925 kg/m$^3$, more preferably from 920 to 925 kg/m$^3$, and an $MFR_2$ of from 0.1 to 0.4 g/10 min, more preferably, from 0.1 to 0.3 g/10 min.

In an alternative embodiment, the oblong polyethylene mulch film is a 3-layered film, wherein at least one of the external layers (i.e the outer layer and/or inner layer) comprises at least 50 wt.-%, relative to the total weight of the respective layer, of a polyethylene having the properties listed above for AOL, ACL and AIL.

It is particularly preferred that the oblong polyethylene mulch film is a 3-layered film, wherein at least one layer, preferably the core layer, comprises from 20 to 50 wt.-%, relative to the total weight of the respective layer, of a component being being a linear low density ethylene polymer, preferably a multimodal linear low density ethylene polymer, more preferably a bimodal linear low density ethylene terpolymer of ethylene with two comonomers selected from alpha-olefins having from 4 to 10 carbon atoms, having a density of from 915 to 925 kg/m$^3$ and a melt flow rate ($MFR_2$) of from 0.5 to 2.0 g/10 min, determined according to ISO 1133.

In an alternative embodiment, the oblong polyethylene mulch film is a 3-layered film, wherein at least one layer, preferably the core layer, comprises from 20 to 50 wt.-%, relative to the total weight of the respective layer, of a component having the properties listed above for BCL

The oblong polyethylene mulch film 1 preferably has a thickness in the range from 10 to 100 $\mu$m, more preferably in the range from 12 to 80 $\mu$m, most preferably in the range from 15 to 70 $\mu$m.

The oblong polyethylene mulch film 1 preferably has a total light transmittance, measured according to ASTM D1003, in the range from 0.0% to 3.0%, preferably in the range of 0.0% to 2.0% and more preferably in the range of 0.0% to 1.0%.

The oblong polyethylene mulch film 1 preferably has a dart drop impact strength (DDI), measured according to ASTM D1709-A, in the range from 2 to 10 g/$\mu$m, more preferably from 2 to 8 g/$\mu$m, most preferably from 3 to 6 g/$\mu$m

The oblong polyethylene mulch film 1 preferably has a tensile modulus (1% secant) in machine direction (MD) in the range of 200 to 450 MPa, and/or a tensile modulus (1% secant) in transverse direction (TD) in the range of 250 to 500 MPa, determined according to ASTM D882.

The oblong polyethylene mulch film 1 preferably has a tensile stress at break in machine direction (MD) in the range of 30 to 60 MPa, and/or a tensile stress at break in transverse direction (TD) in the range of 10 to 40 MPa, determined according to ISO 527-3.

The oblong polyethylene mulch film 1 preferably has a nominal tensile strain at break in machine direction (MD) in the range of 250 to 700%, and/or a nominal tensile strain at break in transverse direction (TD) in the range of 350 to 800%, determined according to ISO 527-3.

The oblong polyethylene mulch film 1 preferably has a tear strength in machine direction (MD) in the range of 2 to 15 gf/micron, more preferably in the range of 4 to 12 gf/micron; and/or a tear strength in transverse direction (TD) in the range of 10 to 40 gf/micron, more preferably in the range of 15 to 35 gf/micron, determined according to ASTM D1922.

When in use, a single crop or group of crops would grow in each perforation 2 of the mulch film 1. The inventors of the present invention have discovered that the positioning of the perforations in the mulch film, and thus the spacing between the crops is key to optimizing the crop yield from a given area of field. This is especially the case when the mulch film is used for growing rice, preferably when the mulch film has the absolute values of A, B, C, and D given above.

The choice of material for the film is also beneficial, since the impressive balance of optical and mechanical properties is important for minimizing water waste and avoiding weed growth. When the film is easily torn or punctured, it is straightforward for weed to grow in the holes. By avoiding tearing and puncturing, this risk is reduced.

Furthermore, the film is able to prevent much light from reaching areas of soil that should not contain the crop, ensuring that the light falls predominantly on the crop, rather than any weeds that may be present. A high reflectance is also important for helping to repel certain insects that are known to affect the growth of crops and increasing the amount of light that reaches the leaves of the crop (i.e. for photosynthesis), with light being provided from both above and below.

The water barrier properties of the polyethylene are also important for minimizing water waste, with the water that evaporates from the surface of the soil able to be recaptured as condensation on the film, rather than simply escaping into the atmosphere.

Crop cultivation system

In a further aspect, the present invention is directed to a crop cultivation system.

The crop cultivation system according to this further aspect comprises:

i) at least one plant bed 8;
ii) one oblong polyethylene mulch film 1 according to the first aspect per plant bed, covering said plant bed 8; and
iii) a drip irrigation system comprising one drip irrigation line 6 per plant bed and a regularly spaced series of drip outlets 7 along said drip irrigation line 6.

In other words, the crop cultivation system according to this aspect comprises:

i) at least one plant bed 8;
ii) one oblong polyethylene mulch film 1 per plant bed, covering said plant bed 8; and
iii) a drip irrigation system comprising one drip irrigation line 6 per plant bed and a regularly spaced series of drip outlets 7 along said drip irrigation line 6,

wherein each oblong polyethylene mulch film 1, being either a monolayer or multilayer film, has a regular array of perforations 2, spaced in two lines 3 symmetrically either side of a first axis 4 that is parallel to the length of the mulch film 1 and that is positioned equidistant from the long edges 5 of the mulch film 1, wherein each line 3 of perforations is parallel with the first axis 4, with the shortest distance between the centre of each perforation 2 and the first axis 4 being defined as A, wherein the perforations 2 are spaced regularly along the line 3 parallel with the first axis 4, having a spacing, defined as B, between the centres of adjacent perforations 2 along either of the two lines 3, wherein B/A is in the range from 1.5 to 2.0, and
wherein each drip irrigation line is positioned along the first axis 4 of each mulch film 1, and the spacing between each drip outlet 7 along the drip irrigation line 6 is defined as E and E/B is in the range from 1.3 to 2.0.

Preferably, the crop cultivation system is a rice cultivation system.

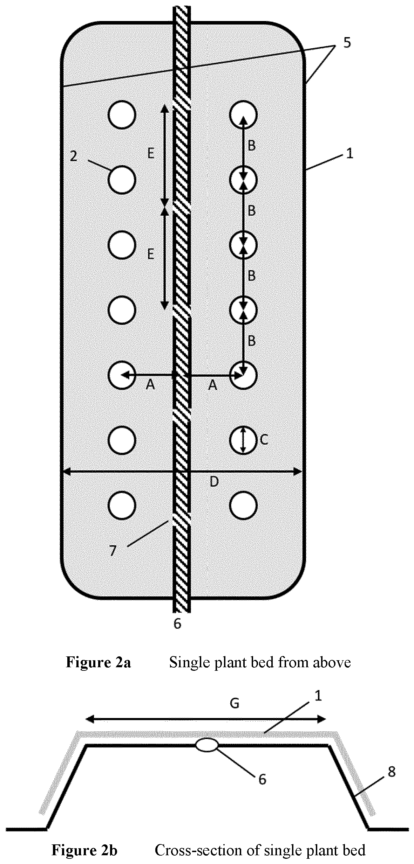

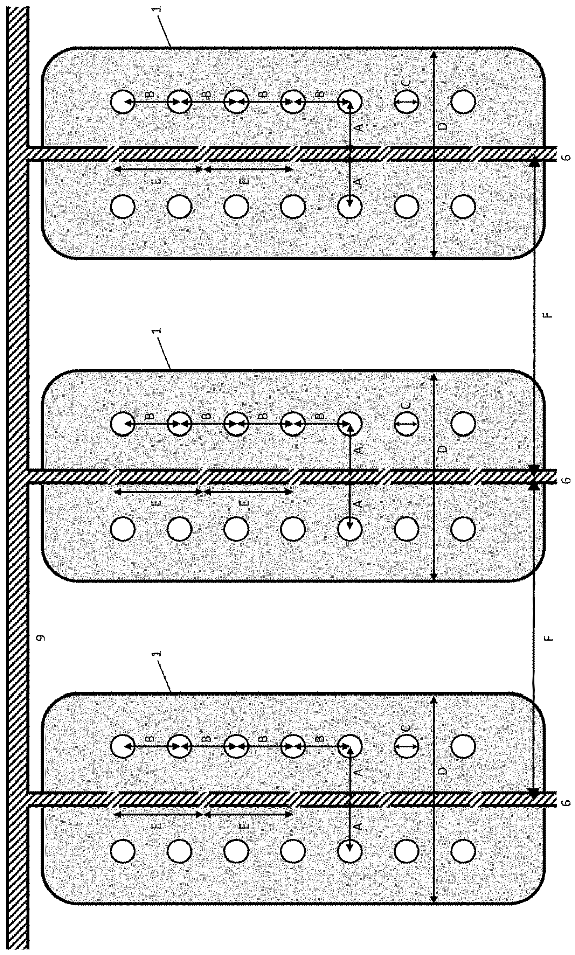

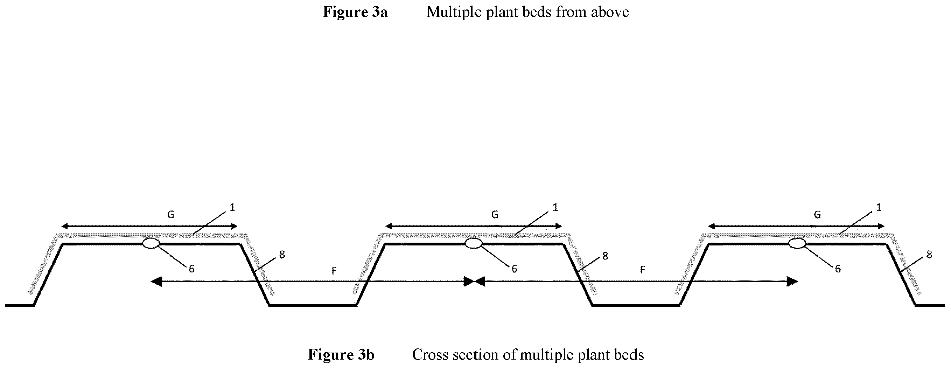

The crop cultivation system can be best understood by reference to Figures 2a, 2b, 3a and 3b.

Figures 2a and 2b depict the view from above and the cross-sectional view of a crop cultivation system consisting of a single plant bed 8, a single mulch film 1, and a drip irrigation system that consists of a single drip irrigation line 6.

The form of plant bed 8 as such is not particularly limited, other than it must be a raised bank formed from soil for growing the target crop. The width of the top of the plant bed is defined as G.

G is preferably less than D (i.e. less than the width of the mulch film), in order that the mulch film 1 may completely cover the top surface of the plant bed and some or all of the sloped sides of the plant bed.

In one embodiment, the ratio of G/D is in the range from 0.3 to 0.8, more preferably in the range from 0.4 to 0.7, most preferably in the range from 0.4 to 0.6.

It is furthermore preferred that the absolute value of distance G is in the range from 40 to 90 cm, more preferably in the range from 45 to 80 cm, most preferably in the range from 50 to 70 cm.

The height of the plant bed 8 is not particularly limited and may be different for different crops. The person skilled in the art should have no difficulty in selecting an appropriate height for the plant bed 8.

The drip irrigation system comprises one drip irrigation line 6 per plant bed and a regularly spaced series of drip outlets 7 along said drip irrigation line 6.

Each drip irrigation line is positioned along the first axis 4 of each mulch film 1, as depicted in Figures 2a and 3a.

In the simplest set up, wherein only one plant bed is present, as depicted in Figures 2a and 2b, the drip irrigation system consists of a single drip irrigation line 6.

The drip irrigation line 6 is a tube suitable for transporting water to the root area of the crops placed in each of the perforations of the mulch film 1.

As well as water, the drip irrigation system may be used to introduce fertilizers into the root area, known in the art as fertigation. The person skilled in the art would be able to select the correct irrigation/fertigation method depending on the desired crop.

The cross-sectional shape of the drip irrigation line(s) 6 is not limited. In some embodiments, the drip irrigation line is a perfectly circular tube, whereas in other embodiments the tube has been somewhat flattened (longer in the horizontal direction than the vertical, when installed). Figures 2a and 3a depict a slightly flattened cross-sectional shape; however, this is merely for illustrative purposes and should not be read as a limitation to the shape of the inventive drip irrigation tubes.

Each drip irrigation line 6 preferably has a cross sectional area in the range from 50 to 400 $mm^2$, more preferably in the range from 65 to 330 $mm^2$, most preferably in the range from 80 to 260 $mm^2$.

Each drip irrigation line 6 preferably has a wall thickness in the range from 0.4 to 2.0 mm, more preferably in the range from 0.6 to 1.5 mm, most preferably in the range from 0.8 to 1.2 mm.

Each drip irrigation line 6 preferably has an outer diameter in the range from 8 to 25 mm, more preferably in the range from 10 to 24 mm, most preferably in the range from 12 to 20 mm.

Furthermore, each irrigation line 6 is preferably made from polyethylene, i.e. from an ethylene-based polymer containing at least 50 wt.-% ethylene monomers. Preferably the ethylene content of the ethylene-based polymer is at least 60 wt.-%, more preferably at least 70 wt.-%, yet more preferably at least 80 wt.-%, most preferably at least 90 wt.-%. If comonomers are present in the polyethylene, then it is preferred that any comonomers are selected from $C_3$ to $C_{12}$ alpha olefins, more preferably from $C_4$ to $Cs$ alpha olefins.

Preferably, the drip irrigation tube comprises a high density polyethylene resin component (contains 1.8 to 2.5 wt% of carbon black), has an $MFR_5$ of from 0.30 to 0.90 g/10 min and/or an $MFR_{21}$ of from 10 to 20 g/10 min, and/or a density of from 952 to 958 kg/$m^3$, and/or an $MFR_{21}/MFR_5$ ratio ($FRR_{21/5}$) of from 20 to 28. As HDPE component for drip irrigation tube, resin Borstar HE1440 as produced by Borouge may be used.

Alternatively or additionally, the drip irrigation tube comprises a linear low density polyethylene component, has an $MFR_2$ of from 0.10 to 0.35 g/10 min and/or an $MFR_5$ of from 0.60 to 1.30 g/10 min and/or an $MFR_{21}$ of from 15 to 28 g/10 min, and/or a density of from 920 to 931 kg/$m^3$, and/or an $MFR_{21}/MFR_2$ ratio ($FRR_{21/2}$) of from 70 to 120, and/or an $MFR_{21}/MFR_5$ ratio ($FRR_{21/5}$) of from 18 to 28. As LLDPE component for drip irrigation tube, resin Borstar LE2270 as produced by Borouge may be used.

In a preferred embodiment, the drip irrigation tube comprises a mixture of 50 to 85 wt% linear low density polyethylene resin component as defined above, and 15 to 50 wt% of a high density polyethylene resin component as defined above.

It is preferred that each irrigation line 6 comprises polyethylene in an amount in the range from 85 to 100 wt.-%, more preferably in the range from 90 to 100 wt.-%, most preferably in the range from 95 to 100 wt.-%.

In addition to the polyethylene as described above, each irrigation line 6 may contain additives (Ad). The additives (Ad) are selected from additives known in the art, preferably selected from the group consisting of antioxidants, stabilizers, fillers, colorants, nucleating agents, antistatic agents, and mixtures thereof.

Such additives are generally commercially available and are described, for example, in "Plastic Additives Handbook", pages 871 to 873, 5th edition, 2001 of Hans Zweifel.

It is preferred that each irrigation line 6 comprises carbon black additives in an amount in the range from 0.5 to 5.0 wt.-%, more preferably in the range from 0.75 to 4.5 wt.-%, most preferably in the range from 1.0 to 4.0 wt.-%.

Preferably, the composition used for each irrigation line 6 has a tensile modulus (1 mm/min) in the range of 150 to 1000 MPa, and/or a Tensile Stress at Yield (50 mm/min) in the range of 7 to 25 MPa, determined according to ISO 527-2/1A from compression-moulded specimens.

As known in the art, drip irrigation lines may be positioned on the soil on the surface of the plant bed, buried under the soil, or suspended above the soil. The drip irrigation line 6 of the present crop cultivation system is preferably either positioned on the surface of the soil or buried under the soil. Most preferably, each drip irrigation line is positioned on the surface of a plant bed.

The drip irrigation line 6 has a regularly spaced series of drip outlets 7 along its length.

The nature of the drip outlets 7 is not particularly limited. They may be in the form of a simple hole in the drip irrigation line 6, as depicted in Figure 2a, or alternatively may be in the form of smaller ancillary tubes that transport the water from the drip irrigation line 6 closer to the root area of the crops.

The choice of which form the drip outlets 7 may take is within the skills of the person skilled in the art, and may depend on the choice of crop.

What is essential to the second aspect of the invention is the spacing between the drip outlets, which is defined as E.

In the second aspect, the ratio of E/B is in the range from 1.3 to 2.0, more preferably in the range from 1.4 to 1.8, most preferably in the range from 1.5 to 1.7.

For use with rice, it is preferred that the absolute value of E is in the range from 30 to 50 cm, more preferably in the range from 35 to 45 cm, most preferably in the range from 37 to 43 cm.

In one particular embodiment, the distance A is in the range from 10 to 20 cm, the distance B is in the range from 17 to 33 cm, the distance C is preferably in the range from 3 to 12 cm, the distance D is in the range from 60 to 210 cm, and the distance E is in the range from 30 to 50 cm.

More preferably, the distance A is in the range from 12 to 18 cm, the distance B is in the range from 20 to 30 cm, the distance C is preferably in the range from 4 to 11 cm, the distance D is in the range from 75 to 180 cm, and the distance E is in the range from 35 to 45 cm.

Most preferably, the distance A is in the range from 13 to 17 cm, the distance B is in the range from 23 to 27 cm, the distance C is preferably in the range from 5 to 10 cm, the distance D is in the range from 90 to 150 cm, and the distance E is in the range from 37 to 43 cm.

The inventors of the present invention have discovered that the combination of a drip irrigation line 6 and a mulch film 1 help to maximize crop yield for a given plant bed 8. In particular, the relationship between the spacing B and the spacing E is essential for achieving optimal delivery of water whilst minimizing water waste.

Figures 3a and 3b depict the view from above and the cross-sectional view of a crop cultivation system consisting of multiple, e.g. three, plant beds 8, multiple, e.g. three, mulch films 1, and a drip irrigation system consisting of a central irrigation line 9 and multiple, e.g. three, drip irrigation lines 6.

The setup of each plant bed, including the associated mulch film and drip irrigation line is the same in the present embodiment comprising multiple plant beds as in the embodiment described above, wherein only one plant bed is present.

When more than one plant bed is present (i.e. multiple plant beds), each of the drip irrigation lines 6 is linked via a central irrigation line 9, which provides water to each of the drip irrigation lines 6.

The multiple drip irrigation lines 6 and the central irrigation line 9 form the drip irrigation system.

As is depicted in Figures 3a and 3b, the drip irrigation lines 6 are positioned parallel to one another and preferably perpendicular to the central irrigation line 9, with a regular spacing between each drip irrigation line 6 defined as F.

The ratio of F/D is preferably in the range from 0.9 to 1.5, more preferably in the range from 0.9 to 1.3, most preferably in the range from 0.9 to 1.2.

For use with rice, it is preferred that the absolute value of F is in the range from 60 to 210 cm, more preferably in the range from 75 to 180 cm, most preferably in the range from 90 to 150 cm.

In one particularly preferred embodiment, the distance A is in the range from 10 to 20 cm, the distance B is in the range from 17 to 33 cm, the distance C is preferably in the range from 3 to 12 cm, the distance D is in the range from 60 to 210 cm, the distance E is in the range from 30 to 50 cm, and the distance F is in the range from 60 to 210 cm.

More preferably, the distance A is in the range from 12 to 18 cm, the distance B is in the range from 20 to 30 cm, the distance C is preferably in the range from 4 to 11 cm, the distance D is in the range from 75 to 180 cm, the distance E is in the range from 35 to 45 cm, and the distance F is in the range from 75 to 180 cm.

Most preferably, the distance A is in the range from 13 to 17 cm, the distance B is in the range from 23 to 27 cm, the distance C is preferably in the range from 5 to 10 cm, the distance D is in the range from 90 to 150 cm, and distance E is in the range from 37 to 43 cm, and the distance F is in the range from 90 to 150 cm.

As mentioned above inventors of the present invention have discovered that the combination of a drip irrigation line 6 and a mulch film 1 help to maximize crop yield for a given plant bed 8. In particular, the relationship between the spacing B and the spacing E is essential for achieving optimal delivery of water whilst minimizing water waste. Furthermore, the spacing F is important for systems having multiple plant beds, both in terms of maximizing water delivery and minimizing water waste. The correct spacing also allows for easy access for a farmer in between the plant beds, enabling them to sufficiently care for the crops during their growth, for example by de-weeding, as well as providing sufficient ventilation.

Figures

Figure 1     Mulch film from above
Figure 2a    Single plant bed from above
Figure 2b    Cross-section of single plant bed
Figure 3a    Multiple plant beds from above
Figure 3b    Cross section of multiple plant beds

1 -    mulch film
2 -    perforation
3 -    line of perforations
4 -    first axis
5 -    long edges of the mulch film
6 -    drip irrigation line

7 -     drip outlet
8 -     plant bed
9 -     central irrigation line
A -     distance between the centres of two adjacent perforations
B -     distance between each line of perforations and the first axis
C -     diameter of perforation
D -     distance between long edges of mulch film (width of mulch film)
E -     distance between each drip outlet
F -     distance between each drip irrigation line
G -     width of the top surface of the plant bed

EXPERIMENTAL SECTION

**A.** Determination Methods

The following definitions of terms and determination methods apply for the above general description of the invention as well as to the below examples, unless otherwise defined.

a) Measurement of melt flow rate MFR

The melt flow rate (MFR) is determined according to ISO 1133 and is indicated in g/10 min. The higher the melt flow rate, the lower the viscosity of the polymer. The MFR is determined at 190 °C for polyethylene and at a loading of 2.16 kg ($MFR_2$), 5.00 kg ($MFR_5$) or 21.6 kg ($MFR_{21}$).
The quantity FRR (flow rate ratio) is an indication of molecular weight distribution and denotes the ratio of flow rates at different loadings. Thus, $FRR_{21/5}$ denotes the value of $MFR_{21}/MFR_5$.

**b) Density**

Density of the polymer was determined according to ISO 1183-1:2004 (method A) on compression molded specimen prepared according to ISO 17855-2 and is given in $kg/m^3$.

**c) GPC conventional method**

Molecular weight averages ($M_z$, $M_w$ and $M_n$), molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i \, x \, M_i)}{\sum_{i=1}^{N} A_i} \quad (2)$$

$$M_z = \frac{\sum_{i=1}^{N} (A_i \, x \, M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.
A high temperature GPC instrument, equipped with either infrared (IR) detector (IR4 or IR5 from PolymerChar (Valencia, Spain) or differential refractometer (RI) from Agilent Technologies, equipped with 3 x Agilent-PLgel Olexis and 1× Agilent-PLgel Olexis Guard columns was used. As mobile phase 1,2,4-trichlorobenzene (TCB) stabilized with 250 mg/L 2,6-Di tert butyl-4-methyl-phenol) was used. The chromatographic system was operated at column temperature of 160 °C and detector at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using 19 narrow MWD polystyrene (PS) standards in the range of 0,5 kg/mol to 11 500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \ x \ 10^{-3} \ mL/g, \quad \alpha_{PS} = 0,655$$

$$K_{PE} = 39 \ x \ 10^{-3} \ mL/g, \quad \alpha_{PE} = 0,725$$

A third order polynomial fit was used to fit the calibration data.

All samples were prepared in the concentration range of around 1 mg/ml and dissolved at 160 °C for 3 (three) hours for PE in fresh distilled TCB stabilized with 250 ppm Irgafos168 under continuous gentle shaking

**d) Comonomer content**

Comonomer Content (%wt and %mol) was determined quantitative nuclear- magnetic resonance (NMR) spectroscopy.

**Quantitative $^{13}$C{$^{1}$H} NMR** spectra recorded in the molten-state using a Broker Avance III 500 NMR spectrometer operating at 500.13 and 125.76 MHz for $^{1}$H and $^{13}$C respectively. All spectra were recorded using a $^{13}$C optimised 7 mm magic-angle spinning (MAS) probehead at 150 °C using nitrogen gas for all pneumatics.

Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05, griffin07}. A total of 1024 (Ik) transients were acquired per spectra.

Quantitative $^{13}$C{$^{1}$H} NMR spectra were processed, integrated and relevant quantitative properties determined from the integrals. All chemical shifts are internally referenced to the bulk methylene signal ($\delta+$) at 30.00 ppm {randall89}. Characteristic signals corresponding to the incorporation of 1-butene were observed {randall89} and the comonomer fraction calculated as the traction of 1-butene in the polymer with respect to all monomer in the polymer.

The amount of isolated 1-butene incorporated in EEBEE sequences was quantified using the integral of the *B2 sites at 39.9 ppm accounting for the number of reporting sites per comonomer

$$B = I_{*B2}$$

With no other signals indicative of other comonomer sequences, i.e. consecutive comonomer incorporation, observed the total 1-butene comonomer content was calculated based solely on the amount of isolated 1-butene sequences:

$$Btotal = B$$

The amount consecutively incorporated 1 -butene in EEBBEE sequences was quantified using the integral of the $\alpha\alpha$B2B2 site at 39.4 ppm accounting for the number of reporting sites per comonomer:

$$BB = 2 \ ^{*} \ I\alpha\alpha B2B2$$

The amount non consecutively incorporated 1 -butene in EEBEBEE sequences was quantified using the integral of the $\beta\beta$B2B2 site at 24.7 ppm accounting for the number of reporting sites per comonomer:

$$BEB = 2 \ ^{*} \ I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1 -butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = Btotal / ( Etotal + Btotal + Htotal )$$

Characteristic signals corresponding to the incorporation of 1-hexene were observed {randall89} and the comonomer fraction calculated as the fraction of 1-hexene in the polymer with respect to all monomer in the polymer.
The amount isolated 1-hexene incorporated in EEHEE sequences was quantified using the integral of the *B4 sites at 38.3 ppm accounting for the number of reporting sites per comonomer:

$$H = I_{*B4}$$

The amount consecutively incorporated 1-hexene in EEHHEE sequences was quantified using the integral of the ααB4B4 site at 40.5 ppm accounting for the number of reporting sites per comonomer:

$$HH = 2 * I_{\alpha\alpha B4B4}$$

The amount non-consecutively incorporated 1-hexene in EEHEHEE sequences was quantified using the integral of the ββB4B4 site at 24.7 ppm accounting for the number of reporting sites per comonomer:

$$HEH = 2 * I_{\beta\beta B4B4}$$

Due to the overlap of the signals from the *B4 and *ββB4B4 sites from isolated (EEHEE) and non-consecutively (EEHEHEE) incorporated 1-hexene respectively the total amount of isolated 1-hexene incorporation is corrected based on the amount of non-consecutive 1-hexene present:

$$H = I_{*B4} - 2 * I_{\beta\beta B4B4}$$

The total 1-hexene content was calculated based on the sum of isolated, consecutive and non-consecutively incorporated 1-hexene:

$$Htotal = H + HH + HEH$$

The total mole fraction of 1-hexene in the polymer was then calculated as:

$$fH = Htotal / ( Etotal + Btotal + Htotal )$$

The amount of ethylene was quantified using the integral of the bulk methylene ($\delta+$) sites at 30.00 ppm. This integral included the $\gamma$ site as well as the 3B4 sites from 1- hexene. The total ethylene content was calculated based on the bulk integral and compensating for the observed 1-butene and 1-hexene sequences and end-groups:

$$E = I_{\delta+} / 2$$

Characteristic signals resulting from saturated end-groups were observed. The content of such saturated end-groups was quantified using the average of the integral of the signals at 22.8 and 32.2 ppm assigned to the 2s and 3s sites respectively:

$$S = (1/2)*(I_{2S} + I_{3S})$$

The presence of isolated comonomer units is corrected for based on the number of comonomer units and saturated end-groups present:

$$Etotal = E + (\S/2)*B + (2/2)*H + (1/4)*HH + (3/4)*HEH + (3/2)*S$$

The mole percent comonomer incorporation is calculated from the mole fraction:

$$B\,[mol\%] = 100 * fB$$

$$H\,[mol\%] = 100 * fH$$

The weight percent comonomer incorporation is calculated from the mole fraction:

$$B\,[wt\%] = 100 * (fB*56.11) / ((fB*56.11) + (fH*84.16) + ((1-(fB+fH))*28.05))$$

$$H\,[wt\%] = 100 * (fH*84.16) / ((fB*56.11) + (fH*84.16) + ((1-(fB+fH))*28.05))$$

randall89: J. Randall, Macromol. Sci., Rev. Macromol. Chcm. Phys. 1989, C29, 201.
klimke06: Klimke, K., Parkinson, M., Piel, C, Kaminsky, W., Spiess, H.W., Wilhelm, M., Macromol. Chem. Phys.2006;207:382.
parkinson07: Parkinson, M., Klimke, K., Spiess, H.W., Wilhelm, M., Macromol. Chem. Phys.2007;208:2128.
pollard04: Pollard, M., Klimke, K., Graf, R., Spiess, H.W., Wilhelm, M., Sperber, O., Piel, C, Kaminsky, W., Macromolecules 2004;37:813.
filip05: Filip, X., Tripon, C, Filip, C, J. Mag. Resn. 2005, 176, 239
griffin07: Griffin, J.M., Tripon, C, Samoson, A., Filip, C, and Brown, S.P., Mag. Res. in Chem.2007 45, SI, S198
castignolles09: Castignolles, P., Graf, R., Parkinson, M., Wilhelm, M., Gaborieau, M., Polymer 50 (2009) 2373

**e) Mechanical Properties**

Tensile properties of polyethylene resin were determined on molded specimens prepared from compression-moulded plaques having a sample thickness of 4 mm. Tensile modulus was determined according to ISO 527-2/1 A at 1 mm/min. and 23°C. To determine stress at yield, a test speed of 50 mm/min. was used.

**Tensile Modulus and Tensile Stress at Break of films**

Tensile properties of films were determined at 23°C according to ISO 527-3 with a specimen Type 2 using blown films. Tensile modulus in machine direction (MD) and tensile modulus in transverse direction (TD) were determined as 1 % secant modulus with 5 mm/min test speed and 50 mm gauge length according to ASTM D882.
Tensile stress at break of films were determined according to ISO 527-3 specimen Type 2 with 50 mm gauge length and 500 mm/min test speed. The film samples were produced as described below under "Examples".

**Nominal Tensile Strain at Break of films**

Nominal Tensile strain at break in machine (MD) and transverse direction (TD) were determined according to ISO 527-3 on films with a thickness as indicated and produced as described below under "Examples".

**Tear Strength of films**

Elmendorf tear strength in machine direction (MD) and in transverse direction (TD) were measured according to ASTM D1922 or ISO 6383-2 and reported in Newton (N) or Gram-force (gf).
Tear Strength per unit thickness (gf/micron) is calculated by dividing Elmendorf Tear strength (in gf) to the thickness of film (in micron)

**Dart Drop Impact**

Dart drop impact (DDI) of films was determined according to ASTM D1709 "method "A" on films with a thickness as indicated and produced as described below under "Examples" and reported in gram (g). DDI per unit thickness (in g/micron) is calculated by dividing DDI (in gram) to the thickness of film (in micron)

**f) Total Light transmittance**

Total light transmittance of plastics film was determined according to ASTM D 1003 and ISO 14782.
Total transmittance is the ratio of transmitted light to the incident light, measured using hazemeter. It is influenced by the absorption and reflection properties. The total transmitted light consists of the directly transmitted and the diffused components.

**B. Examples**

A test rice field (i.e, a paddy) was set up using the inventive crop cultivation system.
The mulch film was a 3-layered film, wherein each layer was a polyethylene layer containing suitable additives (see Table 1). The outer, core and inner layers are present in a thickness ratio 1:1:1 (OL:CL:IL). The composition of each layer is given in Table 1:

**Table 1:** Mulch film formulations

| 3-layer polyethylene film | Formulations |
|---|---|
| Outer Layer of film (layer OL) | FB1200 (84%)<br>UV protection masterbatch (4% )<br>Silver color masterbatch (12%) |
| Core Layer of film (layer CL) | FB1200 (59%)<br>FK1828 (30%)<br>UV protection masterbatch (2%)<br>Black color masterbatch (9%) |
| Inner Layer of film (layer IL) | FB1200 (76%)<br>FM1818 (15%)<br>Black color masterbatch (9%) |

The characteristics of the polymers used in the mulch film are given in Table 2:

**Table 2:** Base polymers of the mulch film

| Resin name | Producer | Type | MFR$_2$ (g/10min) | Density (kg/m$^3$) |
|---|---|---|---|---|
| FK1828 | Borouge | Bimodal 1-butene,1-hexene ethylene terpolymer | 1.5 | 918 |
| FM1818 | Borouge | Bimodal 1-butene ethylene copolymer | 1.1 | 918 |
| FB1200 | Borouge | Bimodal LLDPE (1-butene | 0.2 | 922 |

(continued)

| Resin name | Producer | Type | MFR$_2$ (g/10min) | Density (kg/m$^3$) |
|---|---|---|---|---|
| | | ethylene copolymer) | | |

The masterbatch formulations used in the preparation are as follows:
Plasblak PE2772 commercially available from Cabot India Ltd., used as Black color masterbatch.
UV masterbatch 20 commercially available from Polmann India Ltd. used as UV protection masterbatch.
Blend Silver 4906 commercially available from Blend colours Pvt. Ltd, India, used as "Silver color masterbatch".
The mulch films were produced on a Polyrema (Reifenhauser blown film line with internal bubble cooling system) having an output of 150 kgs/hr and cooling air temperature were in between 12 to 16°C. The detail parameters and temperature profile used for the preparation of the mulch films are listed below in Table 3 and Table 4.

**Table 3:** Blown film line parameters.

| Blown film line parameters | |
|---|---|
| Die diameters | 180 mm |
| Die gap | 1.8 mm |
| Blow up ratio (BUR) | 2.5 : 1 |
| Bubble cooling | IBC |
| Cooling air temperature | 14 °C |

Table 4 lists the temperature profiles of the blown film line i.e., the temperatures used for different layers of the blown film extruders at different locations of the blown film line.

**Table 4:** Temperature profiles (°C) of the blown film line.

| | Extruder zone 1 | Extruder zone 2 | Extruder zone 3 | Extruder zone 4 | Extruder zone 5 | Post Extruder zone 6 | Post Extruder zone 7 | Post Extruder zone 8 |
|---|---|---|---|---|---|---|---|---|
| Outer Layer (OL) | 155 | 170 | 180 | 190 | 190 | 190 | 200 | 200 |
| Core/Middle Layer (CL) | 155 | 170 | 180 | 190 | 190 | 190 | 200 | 200 |
| Inner Layer (IL) | 155 | 170 | 180 | 190 | 190 | 190 | 200 | 200 |
| Die zones | 195 | | | | | | | |

During use in the field, the outer layer of mulch film is exposed to the direct sunlight (i.e. towards the atmosphere) and inner layer of mulch film is exposed to the soil (i.e. faces the ground).
The mulch film was shaped as described in the description, wherein A = 15 cm, B = 25 cm, C = 5 cm, D = 120 cm.
The mechanical/optical properties of the mulch film are described in Table 5:

**Table 5:** Mechanical and optical properties of the inventive mulch film

| Properties | | Inventive Mulch film |
|---|---|---|
| Film Thickness | | 32 μm |
| Tens. Modulus | MD | 350 MPa |
| | TD | 308 MPa |

(continued)

| Properties | | | Inventive Mulch film |
| --- | --- | --- | --- |
| Tens. Stress at break | MD | | 44.9 MPa |
| | TD | | 25.0 MPa |
| Nominal tens. Strain at break | MD | | 412% |
| | TD | | 615% |
| Tear strength | MD | | 3.1 N |
| | MD | | 9.8 gf/$\mu$m |
| | TD | | 8.9 N |
| | TD | | 28.1 gf/$\mu$m |
| Dart Drop Impact (DDI) | | | 128 g |
| | | | 4.0 g/$\mu$m |
| Total light transmittance | | | 0.2% |

The drip irrigation lines were formed from a 70:25:5 blend of LLDPE:HDPE:CBM and had an outer diameter of 16 mm, a wall thickness of approximately 1 mm, and thus a cross sectional area of approx. 150 mm$^2$. As LLDPE, Borstar resin LE2270, having an $MFR_2$ of 0.22 g/10 min and a density of 0.926 g/cm$^3$, was used, whilst as HDPE, Borstar resin HE1440, having an $MFR_5$ of 0.60 g/10 min and a density of 0.956 g/cm$^3$, was used. CBM is the carbon black masterbatch Plasblak PE2772 commercially available from Cabot India Ltd.

The drip outlets were regularly spaced at 40 cm intervals (E = 40 cm), and the drip irrigation lines were spaced at 120 cm intervals along the central irrigation line (F = 120 cm).

The plant beds were formed by raising the soil into approx. 20 to 30 cm high banks, having a width at the top of 60 cm (G = 60 cm).

Once the crop cultivation system had been assembled and the plant bed pre-irrigated, rice seedlings were introduced into the perforations in the mulch film. Both the mulch film and the drip irrigation line were easily laid using tractors without any damage to either component.

The discharge from the drippers was set to 4 litres per hour, and the plant beds were irrigated for 15 minutes per day until 10 days prior to harvesting (which took place on day 120 after planting). Depending on the local weather conditions, it was not necessary to irrigate every day.

In just four to five days after planting, more than 95% of the seedlings were well established.

Following harvesting, it was possible to easily remove the mulch film, which minimizes the accumulation of plastic debris and soil pollution.

Through using the inventive crop cultivation system, it was possible to improve crop yields (6.5 to 8.0 tons of rice per hectare), whist simultaneously using less seeds (4 to 5 kg per acre) than would be the case under conventional methods (4.5 to 5.5 tons of rice per hectare and 12 to 15 kg of seeds per acre). Water consumption was drastically reduced compared to conventional methods, with only 2000 to 3000 litres of water required per kg of rice, as opposed to 4500 to 5000 litres that would normally be required.

Furthermore, minimal weed growth was observed when using the inventive crop cultivation system, meaning that the farmer would not be required to intensively de-weed the crops during their growth. The rice grown was also healthier than rice grown under convention methods, presumably due to the minimization of pests and weeds and the optimized growing conditions (i.e. light, water and optionally fertilizer). Also observed was improved husk vs. grain ratio during milling.

Finally, the straw collected from the rest of the plant provided improved cattle fodder, allowing for easier crop rotation, which leads to improved land utilization.

Overall, given the above factors, it was calculated that the productivity had increased by 25 to 35%, relative to conventional methods of rice cultivation.

**Claims**

1. A crop cultivation system comprising:

i) at least one plant bed 8;
ii) one oblong polyethylene mulch film 1 per plant bed, covering said plant bed 8; and
iii) a drip irrigation system comprising one drip irrigation line 6 per plant bed and a regularly spaced series of drip outlets 7 along said drip irrigation line 6,

wherein each oblong polyethylene mulch film 1, being either a monolayer or multilayer film, has a regular array of perforations 2, spaced in two lines 3 symmetrically either side of a first axis 4 that is parallel to the length of the mulch film 1 and that is positioned equidistant from the long edges 5 of the mulch film 1, wherein each line 3 of perforations is parallel with the first axis 4, with the shortest distance between the centre of each perforation 2 and the first axis 4 being defined as A, wherein the perforations 2 are spaced regularly along the line 3 parallel with the first axis 4, having a spacing, defined as B, between the centres of adjacent perforations 2 along either of the two lines 3, wherein B/A is in the range from 1.5 to 2.0, and wherein each drip irrigation line is positioned along the first axis 4 of each mulch film 1, and the spacing between each drip outlet 7 along the drip irrigation line 6 is defined as E and E/B is in the range from 1.3 to 2.0.

2. The crop cultivation system according to claim 1, wherein the perforations 2 of the oblong polyethylene mulch film 1 are essentially circular and have a diameter defined as C, wherein C/A is in the range from 0.20 to 0.75.

3. The crop cultivation system according to claim 1 or claim 2, wherein the oblong polyethylene mulch film 1 is a multilayer film, more preferably a 3-layered film.

4. The crop cultivation system according to any one of the preceding claims, wherein the oblong polyethylene mulch film 1 has a total light transmittance in the range from 0.0% to 3.0%, preferably in the range of 0.0% to 2.0% and more preferably in the range of 0.0% to 1.0%, determined according to ASTM D1003.

5. The crop cultivation system according to any one of the preceding claims, wherein the oblong polyethylene mulch film 1 has a dart drop impact strength (DDI), measured according to ASTM D 1709/A, in the range from 2 to 10 g/$\mu$m, more preferably from 2 to 8 g/$\mu$m, most preferably from 3 to 6 g/$\mu$m and/or a tear strength (elmendorf) in machine direction (MD) in the range of 2 to 15 gf/$\mu$m, more preferably in the range of 4 to 12 gf/$\mu$m, determined according to ASTM D1922.

6. The crop cultivation system according to any one of the preceding claims, wherein the oblong polyethylene mulch film 1 has a thickness in the range from 10 to 100 $\mu$m, more preferably in the range from 12 to 80 $\mu$m, most preferably in the range from 15 to 70 $\mu$m.

7. The crop cultivation system according to any one of the preceding claims, wherein distance between the long edges of the oblong polyethylene mulch film 1 is defined as D and D/A is in the range from 4 to 14.

8. The crop cultivation system according to any one of the preceding claims, wherein A is in the range from 10 to 20 cm, B is in the range from 17 to 33 cm and E is in the range from 30 to 50 cm.

9. The crop cultivation system according to any one of the preceding claims, comprising at least 50 wt.-%, relative to the total weight of the oblong polyethylene mulch film, of a polyethylene copolymer have a density of from 915 to 925 kg/m$^3$, more preferably from 920 to 925 kg/m$^3$, and an MFR$_2$ of from 0.1 to 0.4 g/10 min, more preferably, from 0.1 to 0.3 g/10 min.

10. The crop cultivation system according to any one of the preceding claims, being a 3-layered film, wherein at least one of the external layers comprises at least 50 wt.-%, relative to the total weight of the respective layer, of a polyethylene copolymer, preferably a linear low density ethylene polymer, preferably a multimodal linear low density ethylene polymer, more preferably a bimodal linear low density ethylene copolymer, wherein the polyethylene copolymer has a density of from 915 to 925 kg/m$^3$, more preferably from 920 to 925 kg/m$^3$, and an MFR$_2$ of from 0.1 to 0.4 g/10 min, more preferably, from 0.1 to 0.3 g/10 min.

11. The crop cultivation system according to any one of the preceding claims, being a 3-layerd film, wherein at least one layer, preferably the core layer, comprises from 20 to 50 wt.-%, relative to the total weight of the respective layer, of a component being being a linear low density ethylene polymer, preferably a multimodal linear low density ethylene polymer, more preferably a bimodal linear low density ethylene terpolymer of ethylene with two comonomers selected from alpha-olefins having from 4 to 10 carbon atoms, having a density of from 915 to 925 kg/m$^3$ and a melt

flow rate ($MFR_2$) of from 0.5 to 2.0 g/10 min, determined according to ISO 1133.

12. The crop cultivation system according to any one of the preceding claims, wherein each drip irrigation line is positioned on the surface of a plant bed.

13. The crop cultivation system according to any one of the preceding claims, comprising multiple plant beds, wherein the drip irrigation system comprises multiple drip irrigation lines 6, linked by a central irrigation line 9, positioned parallel to one another with a regular spacing defined as F, wherein F/D is in the range from 0.9 to 1.5.

14. The crop cultivation system according to any one of the preceding claims, being a rice cultivation system.

15. An oblong polyethylene mulch film 1 as defined in any one of claims 1 to 11.

**Figure 1**     Mulch film from above

**Figure 2a**     Single plant bed from above

**Figure 2b**     Cross-section of single plant bed

**Figure 3a**     Multiple plant beds from above

**Figure 3b**     Cross section of multiple plant beds

# EUROPEAN SEARCH REPORT

Application Number

EP 22 18 1581

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 607 260 B1 (FRALEIGH JAY [US]) 27 October 2009 (2009-10-27) | 1,2,4, 6-8, 12-15 | INV. A01G13/02 A01G25/02 |
| Y | * figures 1, 2A-2B, 3-5, 9 * | 3,10,11 | |
| A | * column 2, lines 24-44 * * column 6, lines 3-4 * * column 6, line 54 - column 7, line 3 * | 5,9 | |
| Y | CN 108 094 006 B (ZHENGXIN PACKAGING CO LTD DONGGUAN) 24 January 2020 (2020-01-24) | 3,10,11 | |
| A | * claims 1, 7-8; figure 1 * | 1 | |
| A | US 5 117 580 A (BROWN G MARVIN [US]) 2 June 1992 (1992-06-02) * claims 1-2; figures 1-4, 6-8 * * column 2, lines 9-25, 65-68 * | 1 | |
| A | NL 2 025 721 B1 (SHANDONG INST POMOLOGY [CN]) 8 September 2021 (2021-09-08) * figures 1-2 * | 1 | |
| A | KR 2020 0111991 A (CHOI JONG SOO [KR]) 5 October 2020 (2020-10-05) * figures 1a, 1b * | 1 | TECHNICAL FIELDS SEARCHED (IPC) A01G |

The present search report has been drawn up for all claims

| Place of search | Date of completion of the search | Examiner |
|---|---|---|
| The Hague | 8 December 2022 | Guillem Gisbert, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 1581

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2022

| Patent document cited in search report | | Publication date | Patent family member(s) | | Publication date |
|---|---|---|---|---|---|
| US 7607260 | B1 | 27-10-2009 | US 7607260 B1 | | 27-10-2009 |
| | | | US 7913451 B1 | | 29-03-2011 |
| CN 108094006 | B | 24-01-2020 | NONE | | |
| US 5117580 | A | 02-06-1992 | NONE | | |
| NL 2025721 | B1 | 08-09-2021 | CN 111109037 A | | 08-05-2020 |
| | | | NL 2025721 B1 | | 08-09-2021 |
| KR 20200111991 | A | 05-10-2020 | NONE | | |

For more details about this annex : see Official Journal of the European Patent Office, No. 12/82

## REFERENCES CITED IN THE DESCRIPTION

### Patent documents cited in the description

- WO 2004000933 A1
- WO 2016083208 A
- WO 2021013552 A

### Non-patent literature cited in the description

- **HANS ZWEIFEL.** Plastic Additives Handbook. 2001, 871-873
- **J. RANDALL.** *Macromol. Sci., Rev. Macromol. Chcm. Phys.,* 1989, vol. C29, 201
- **KLIMKE, K. ; PARKINSON, M. ; PIEL, C ; KAMINSKY, W. ; SPIESS, H.W. ; WILHELM, M.** *Macromol. Chem. Phys,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C ; KAMINSKY, W.** *Macromolecules,* 2004, vol. 37, 813
- **FILIP, X. ; TRIPON, C ; FILIP, C.** *J. Mag. Resn,* 2005, vol. 176, 239
- **GRIFFIN, J.M. ; TRIPON, C ; SAMOSON, A. ; FILIP, C ; BROWN, S.P.** *Mag. Res. in Chem.,* 2007, vol. 45, S198
- **CASTIGNOLLES, P. ; GRAF, R. ; PARKINSON, M. ; WILHELM, M. ; GABORIEAU, M.** *Polymer,* 2009, vol. 50, 2373